(19) Europäisches Patentamt
European Patent Office
Office européen des brevets

(11) Publication number: **0 135 971**
**B1**

# (12) EUROPEAN PATENT SPECIFICATION

(45) Date of publication of patent specification: **27.07.88**

(51) Int. Cl.[4]: **G 02 B 6/42,** H 01 L 31/02, C 08 F 299/06

(21) Application number: **84201323.7**

(22) Date of filing: **12.09.84**

## (54) Method of optically connecting a light conductor to an electro-optical device.

(30) Priority: **22.09.83 NL 8303251**

(43) Date of publication of application:
**03.04.85 Bulletin 85/14**

(45) Publication of the grant of the patent:
**27.07.88 Bulletin 88/30**

(84) Designated Contracting States:
**DE FR GB IT NL SE**

(56) References cited:
**DE-A-3 013 826**
**GB-A-2 053 563**

**CHEMICAL ABSTRACTS, vol. 93, 1980, page 574, no. 213149n, Columbus, Ohio, US; & JP - A - 80 13 927 (MITSUBISHI ELECTRIC CO.) 31-01-1980**

**CHEMICAL ABSTRACTS, vol. 96, 1982, page 51, no. 123968m, Columbus, Ohio, US; & JP - A - 81 161 485 (MITSUBISHI RAYON CO. LTD.) 11-12-1981**

(73) Proprietor: **N.V. Philips' Gloeilampenfabrieken**
**Groenewoudseweg 1**
**NL-5621 BA Eindhoven (NL)**

(72) Inventor: **Broer, Dirk Jan**
**c/o INT. OCTROOIBUREAU B.V. Prof. Holstlaan 6**
**NL-5656 AA Eindhoven (NL)**
Inventor: **Finck, Johan Christiaan Jacobus**
**c/o INT. OCTROOIBUREAU B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof. Holstlaan 6**
**NL-5656 AA Eindhoven (NL)**

**EP 0 135 971 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a method of optically connecting a light conductor to an electro-optical device by means of a curable lacquer comprising at least one oligomer selected from the group formed by polyester-urethane-acrylates and polyether-urethane-acrylates, a heat- or light-activatable initiator and a diluent, said curable lacquer being contacted with the light conductor and the elctro-optical device and after mutual positioning of the light conductor and the electro-optical device being cured by means of a rise in the temperature or by exposure to light. The invention may be used, for example, in optically connecting telecommunication glass fibres to semiconductor lasers.

Such a method is described, for example, in Netherlands Patent Application No. 8002040, according to which method a curable lacquer is provided on the parts to be connected, after which the light conductor and the electro-optical device are aligned optically and the curable lacquer is then cured under the influence of actinic light. An important advantage of this method is the absence of solvents, so that upon curing no material need evaporate from the connection. The curable lacquer comprises at least one oligomer, preferably selected from the group of oligomeric urethanes. The curable lacquer furthermore comprises an actinic-light activatable initiator and a diluting monomer which serves to give the curable lacquer a suitable viscosity between 1 and 20 Pa.s. After curing, the lacquer has a modulus of elasticity between 10 and 300 MPa.

In order to restrict coupling-out of the light and hence loss of light modes in the optical connection as much as possible, it is desired for the curable lacquer to have a refractive index after curing which approaches the refractive index of the light conductor as nearly as possible. The desired refractive index is usually between 1.48 and 1.50 for connecting optical glass fibres to semiconductor lasers. The refractive index may be adjusted by adapting the quantity of diluting monomer, but the scope is restricted by the requirements which are imposed on the viscosity of the lacquer prior to curing, and upon the modulus of elasticity of the lacquer after curing.

It is the object of the invention to provide a method of optically connecting a light conductor to an electro-optical device in which a curable lacquer is used, the composition of which can be adapted in such a manner that the refractive index after curing is within 0.05% of the desired value, the desired mechanical properties being maintained.

According to the invention this object is achieved by means of a method in which the curable lacquer comprises a reactive diluent, from 40 to 95% by weight of the oligomer and from 0.5 to 5% by weight of the initiator, whereby the refractive index of the lacquer which is reached after curing is adjusted by the addition of from 2 to 30% by weight of a reactive diluent which has an increasing influence on the refractive index and from 2 to 30% by weight of a reactive diluent which has a refractive index-decreasing influence.

A method of optically connecting a light conductor to an electro-optical device, in which method a diluent is employed in different composition ranges, is described in DE—A—3013826, which method does however not specify how to achieve a certain refractive index by using certain amounts of reactive diluents.

The invention is based on the recognition of the fact that the refractive index can be accurately adjusted by adding to the curable lacquer both a reactive diluent which increases the refractive index and a reactive diluent which reduces the refractive index, while the overall quantity of reactive diluents can be chosen freely. This has for its advantage that with the overall quantity of the reactive diluents the viscosity can be adjusted prior to curing and the modulus of elasticity of the lacquer can be adjusted after curing. The mutual ratio of the reactive diluents establishes the refractive index. The reactive diluents are polymerised *in situ* upon curing so that upon curing no material need be removed from the connection, for example by evaporation.

Suitable reactive diluents having a refractive index-increasing influence are N-vinyl-2-pyrrolidone, 2'-oxybenzophenone-2-ethoxy-ethyl-acrylate and 2-phenoxy-ethylacrylate. Suitable reactive diluents having a refractive index-reducing influence are 2-ethoxy-ethyl-acrylate and 2'-ethoxy-2-ethoxy-ethyl-acrylate.

Suitable heat-activatable initiators are organic peroxides and azobisisobutyronitrile, which can be activated by a rise in temperature to between 50 and 100°C.

A suitable light-activatable initiator is α,α-dimethoxy-α-phenyl-acetophenone which can be activated by exposure to UV light.

The refractive index of a lacquer after curing can be computed simply from the composition of the lacquer because the contribution of each component to the refractive index is proportional to the volume fraction thereof in the mixture, within the range of compositions of the lacquer according to the invention. By measuring the refractive indices of lacquers with only a few different compositions, the contributions of the oligomer and of the reactive diluents to the refractive index can be established. The refractive index that is reached after curing the lacquer is measured because the refractive index is influenced by polymerisation shrinkage which occurs in the reactive diluents. The composition which is necessary to obtain a desired refractive index can now be determined by simple linear interpolation.

The accompanying formula sheet shows the structure of the formulae of a few compounds used in methods according to the invention:

Fig. 1 shows a polyester-urethane-acrylate,

Fig. 2 shows a polyether-urethane-acrylate,

Fig. 3 shows N-vinyl-2-pyrrolidone,

Fig. 4 shows 2′-oxybenzophenone-2-ethoxy-ethylacrylate,
Fig. 5 shows 2-phenoxy-ethyl-acrylate,
Fig. 6 shows 2-ethoxy-ethyl-acrylate,
Fig. 7 shows 2′-ethoxy-2-ethoxy-ethyl-acrylate,
Fig. 8 shows azobisisobutyronitrile, and
Fig. 9 shows α,α-dimethoxy-α-phenyl-acetophenone.
The invention will now be described in greater detail with reference to a number of examples.

Example 1

A curable lacquer is prepared with 59.5% by weight of a polyester-urethane-acrylate as shown in Fig. 1 in which *m* is on an average 2.6 and *n* is on an average 8. Said compound after curing without a reactive diluent has a refractive index $n_D$ = 1.4935. The lacquer furthermore comprises 20% by weight of N-vinyl-2-pyrrolidone, 20% by weight of 2-ethoxy-ethyl-acrylate and 0.5% by weight of azobisisobutyronitrile. The lacquer is provided between an optical glass fibre and a semiconductor laser which are aligned optically. The whole construction is then kept at a temperature of 70°C for 1 hour in a nitrogen atmosphere. After curing, the lacquer has a refractive index $n_D$ = 1.5014.

Example 2

A curable lacquer is prepared and used to optically connect an optical glass fibre to a semiconductor laser in a manner similar to that described in Example 1. The lacquer contains 69.5% by weight of the polyester-urethane-acrylate, 5% by weight of N-vinyl-2-pyrrolidone, 25% by weight of 2-ethoxy-ethyl-acrylate and 0.5% by weight of azobisisobutyronitrile. After curing for 1 hour at 70°C, the lacquer has a refractive index $n_D$ = 1.4904.

Example 3

A curable lacquer is prepared and used to optically connect an optical glass fibre to a semiconductor laser in a manner similar to that described in Example 1. The lacquer contains 68.8% by weight of the polyester-urethane-acrylate, 14.7% by weight of N-vinyl-2-pyrrolidone, 14.7% by weight of 2′-ethoxy-2-ethoxy-ethyl-acrylate and 2.0% by weight of α,α-dimethoxy-α-phenyl-acetophenone. The lacquer is cured by exposure to UV light of 200 to 400 nm for 5 seconds. After curing, the lacquer has a refractive index $n_D$ = 1.4994.

Example 4

A curable lacquer is prepared with 68.6% by weight of a polyether-urethane-acrylate as shown in Fig. 2, in which *n* is on an average 75. The lacquer is used to optically connect an optical glass fibre to a semiconductor laser in a manner similar to that described in Example 1. This compound upon curing without a reactive diluent has a relatively low refractive index, $n_D$ = 1.4682, so that a slightly larger quantity of a refractive index-increasing reactive diluent may be necessary. Particularly suitable therefor are 2′-oxy-benzophenone-ethoxy-ethyl-acrylate and 2-phenoxy-ethyl-acrylate. According to this Example 24.5% by weight of 2′-oxybenzophenone-2-ethoxy-ethyl-acrylate is used with 4.9% by weight of 2-ethoxy-ethylacrylate and 2.0% by weight of α,α-dimethoxy-α-phenyl-acetophenone. The lacquer is cured by exposure to an average-pressure mercury-vapour lamp for 0.12 seconds. After curing, the refractive index of the lacquer is 1.4915.

Example 5

A curable lacquer is prepared and used to optically connect an optical glass fibre to a semiconductor laser in a manner similar to that described in Example 4, in which 78.4% by weight of the polyether-urethane-acrylate is used, with 14.7% by weight of 2′-oxybenzophenone-2-ethoxy-ethylacrylate, 4.9% by weight of 2-ethoxy-ethyl-acrylate and 2.0% by weight of α,α-dimethoxy-α-phenyl-acetophenone. The refractive index after curing by radiation is 1.4821.

In the above Examples, all refractive indices were measured at 25°C. After curing the lacquers described in the Examples have a modulus of elasticity of approximately 5 MPa. The glass transition temperature is below −30°C so that the cured lacquer is rubber-like at the operating temperature. Flow of the cured lacquer does not occur at temperatures up to 100°C. The number of transmitted light modes is at least 5. The lacquer is readily transparent at wavelengths between 800 and 900 nm, as is desired for telecommunication applications. The bonding of the lacquer to quartz, to glass and to the semiconductor laser is good. The yield of good optical connections after an accelerated life test increased by 20% by using the method according to the invention.

**Claims**

1. A method of optically connecting a light conductor to an electro-optical device by means of a curable lacquer comprising at least one oligomer selected from the group formed by polyester-urethane-acrylates and polyether-urethane-acrylates, a heat- or light-activatable initiator and a diluent, said curable lacquer being contacted with the light conductor and the electro-optical device and after mutual positioning of the

light conductor and the electro-optical device being cured by means of a rise in the temperature or by exposure to light, characterized in that the curable lacquer comprises a reactive diluent from 40 to 95% by weight of the oligomer and from 0.5 to 5% by weight of the initiator, whereby the refractive index of the lacquer which is reached after curing is adjusted by the addition of from 2 to 30% by weight of a reactive diluent which has a refractive index-increasing influence and from 2 to 30% by weight of a reactive diluent which has a refractive index-reducing influence.

2. A method as claimed in Claim 1, characterized in that the reactive diluent having a refractive index-increasing influence is selected from the group formed by N-vinyl-2-pyrrolidone, 2'-oxybenzophenone-2-ethoxy-ethyl-acrylate and 2-phenoxy-ethyl-acrylate.

3. A method as claimed in Claim 1, characterized in that the reactive diluent having a refractive index-reducing influence is 2-ethoxy-ethyl-acrylate or 2'-ethoxy-2-ethoxy-ethyl-acrylate.

4. A method as claimed in any of Claims 1 to 3, characterized in that the initiator is azobisobutyronitrile and that curing is carried out by a rise in the temperature.

5. A method as claimed in any of Claims 1 to 3, characterized in that the initiator is α,α-dimethoxy-α-phenyl-acetophenone and curing is carried out by exposure to UV light.

6. A method as claimed in any of Claims 1 to 5, characterized in that the oligomer is a polyester-urethane-acrylate represented by the following structural formula:

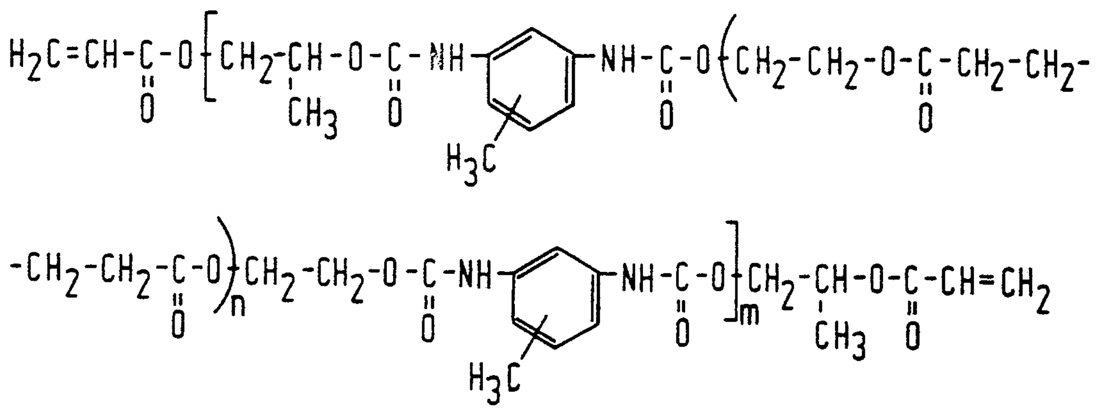

in which $m$ is on an average 2.6 and $n$ is on an average 8.

7. A method as claimed in any of Claims 1 to 5, characterized in that the oligomer is a polyether-urethane-acrylate represented by the following structural formula:

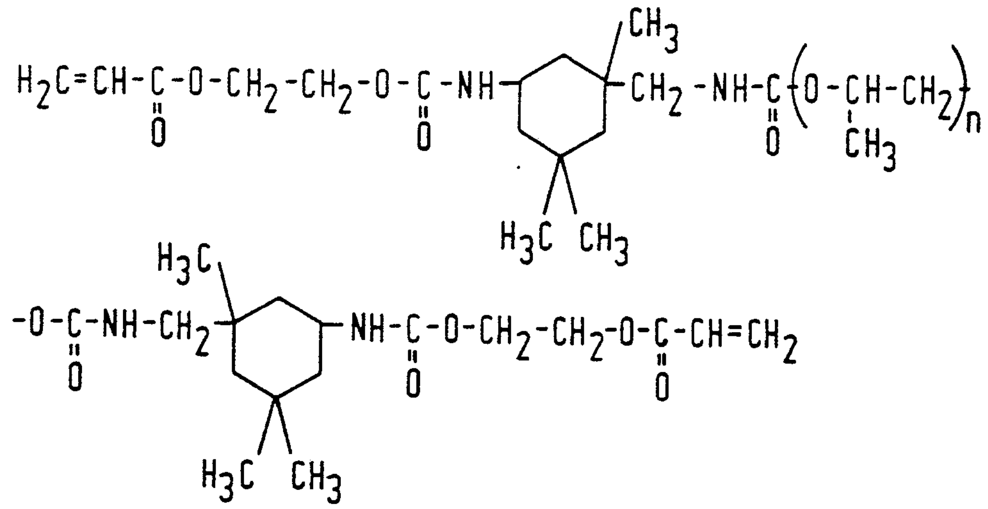

in which $n$ is on an average 75 and in which the reactive diluent having a refractive index-increasing influence is selected from the group formed by 2'-oxybenzophenone-2-ethoxy-ethyl-acrylate and 2-phenoxy-ethyl-acrylate.

**Patentansprüche**

1. Verfahren zur optischen Verbindung eines Lichtleiters mit einem elektrooptischen Gerät mittels eines härtbaren Lackes, der mindestens ein Oligomer aufweist, das gewählt worden ist aus der Gruppe, die durch Polyesterurethanakrylaten und Polyätherurethanakrylaten gebildet ist, weiterhin einen wärme- oder lichtaktivierbaren Initiator sowie ein Verdünnungsmittel, wobei der härtbare Lack mit dem Lichtleiter sowie mit dem elektrooptischen Gerät verbunden wird und nach einer gegenseitigen Ausrichtung des Lichtleiters und des elektrooptischen Gerätes durch Temperaturanstieg oder dadurch, dass er dem Licht ausgesetzt wird, zum Aushärten gebracht wird, dadurch gekennzeichnet, dass der härtbare Lack ein reaktives Verdünnungsmittel aufweist und zwar in einer Menge von 40 bis 95 Gew.% des Oligomers und von 0.5 bis 5 Gew.% des Initiators, wobei die Brechzahl des Lackes, die nach dem Aushärten erreicht wird, durch Hinzufügung von 2 bis 30 Gew.% eines reaktiven Verdünnungsmittels, das einen brechzahlerhöhenden Einfluss hat, sowie von 2 bis 30 Gew.% eines reaktiven Verdünnungsmittels, das einen brechzahlherabsetzenden Einfluss hat, eingestellt wird.

2. Verfahren nach Anspruch 1, dadurch gekennzeichnet, dass das reaktive Verdünnungsmittel mit einem brechzahlerhöhenden Einfluss aus der Gruppe gewählt worden ist, die durch N-Vinyl-2-Pyrrolidon, 2'-Oxybenzophenon-2-Äthoxi-Äthylakrylat und 2-Phenoxy-Äthylakrylat gebildet wird.

3. Verfahren nach Anspruch 1, dadurch gekennzeichnet, dass das reaktive Verdünnungsmittel mit einem brechzahlherabsetzenden Einfluss 2-Äthoxi-Äthylakrylat oder 2'-Äthoxi-2-Äthoxi-Äthylakrylat ist.

4. Verfahren nach einem der Ansprüche 1 bis 3, dadurch gekennzeichnet, dass der Initiator Azobisobutyronitril ist und dass die Aushärtung durch Temperaturanstieg durchgeführt wird.

5. Verfahren nach einem der Ansprüche 1 bis 3, dadurch gekennzeichnet, dass der Initiator α,α-Dimethoxy-α-Phenyl-Azetophenon ist und die Aushärtung durch Bestrahlung mit UV-Licht erfolgt.

6. Verfahren nach einem der Ansprüche 1 bis 5, dadurch gekennzeichnet, dass das Oligomer ein Polyesterurethanakrylat ist, das durch die folgende Strukturformel dargestellt wird:

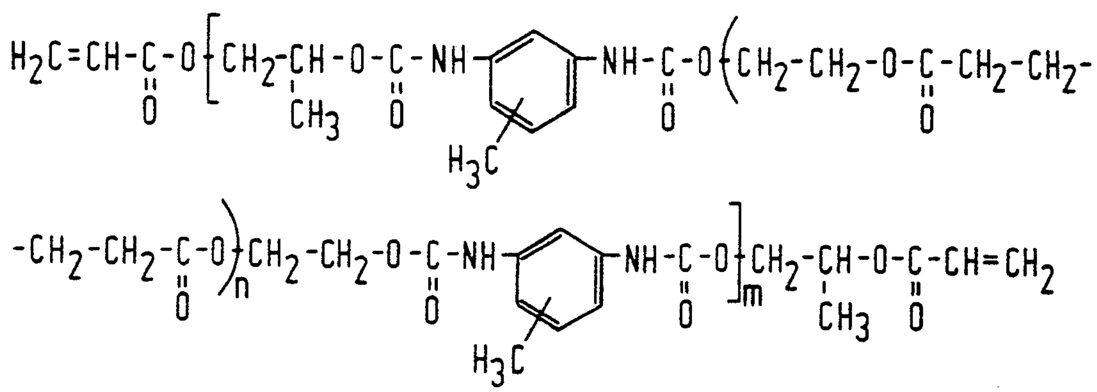

in der m im Schnitt 2.6 und n im Schnitt 8 ist.

7. Verfahren nach einem der Ansprüche 1 bis 5, dadurch gekennzeichnet, dass das Oligomer ein Polyätherurethanakrylat ist, das durch die folgende Strukturformel dargestellt wird:

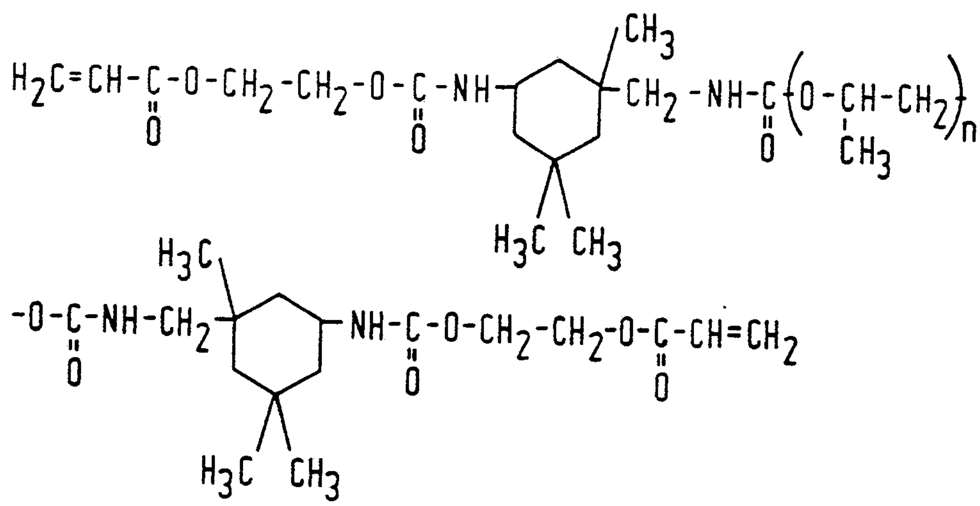

in der n im Schnitt 75 ist und in der das reaktive Verdünnungsmittel mit einem brechzahlerhöhenden

Einfluss gewählt ist aus der Gruppe, die gebildet ist durch: 2'-Oxybenzophenon-2-Äthoxy-Äthylakrylat und 2-Phenoxy-Äthylakrylat.

**Revendications**

1. Méthode pour connecter optiquement un guide de lumière à un dispositif électro-optique à l'aide d'un vernis durcissable contenant au moins un oligomère sélectionné dans le groupe formé par les acrylates de polyester-uréthane et les acrylates de polyétheruréthane, un initiateur pouvant être activé à l'aide de chaleur ou de lumière et un diluant, ledit vernis durcissable étant mis en contact avec le guide de lumière et le dispositif électro-optique et après positionnement mutuel du guide de lumière et du dispositif électro-optique, ledit vernis est durci par augmentation de la température ou par exposition à de la lumière, caractérisé en ce que le vernis durcissable contient un diluant réactif constitué par 40 à 95% en poids de l'oligomère et 0.5 à 5% en poids de l'initiateur, l'indice de réfraction du vernis atteint après durcissement est établi par addition de 2 à 30% en poids d'un diluant réactif excerçant une influence croissante sur l'indice de réfraction et de 2 à 30% en poids d'un diluant réactif exerçant une influence décroissante sur l'indice de réfraction.

2. Méthode selon la revendication 1, caractérisée en ce que le diluant réactif exerçant une influence croissante sur l'indice de réfraction est sélectionné dans le groupe formé par la N-vinyl-2-pyrrolidone, l'acrylate de 2'-oxybenzophénone-2-éthoxy-éthyle et l'acrylate de 2-phénoxy-éthyle.

3. Méthode selon la revendication 1, caractérisée en ce que le diluant réactif exerçant une influence réductrice de l'indice de réfraction est l'acrylate de 2-éthoxy-éthyle ou l'acrylate de 2'-éthoxy-2-éthoxy-éthyle.

4. Méthode selon l'une des revendications 1 à 3, caractérisée en ce que l'initiateur est l'azobisobutyronitrile et le durcissement s'effectue par augmentation de la température.

5. Méthode selon l'une des revendications 1 à 3, caractérisée en ce que l'initiateur est la α,α-diméthoxy-α-phénylacétophénone et le durcissement s'effectue par exposition à de la lumière ultraviolette.

6. Méthode selon l'une des revendications 1 à 5, caractérisée en ce que l'oligomère est un acrylate de polyester-uréthane représenté par la formule développée suivante:

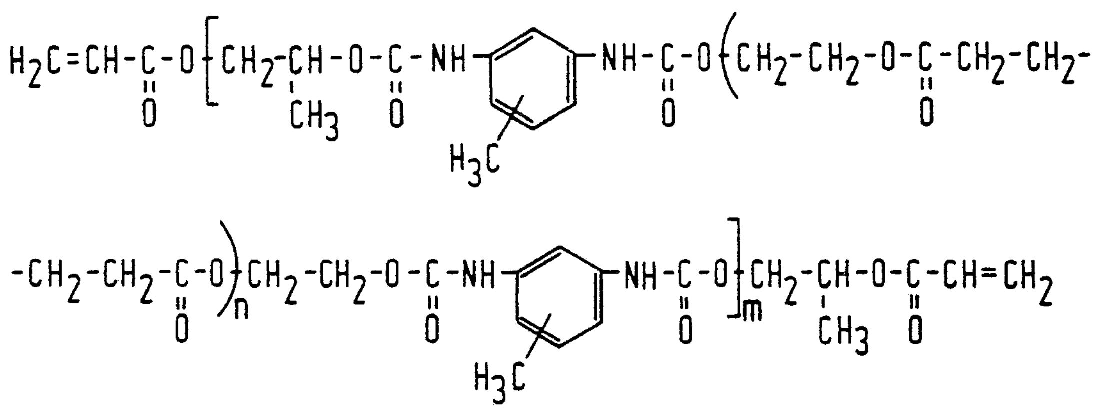

dans laquelle $m$ est en moyenne de 2.6 et $n$ est en moyenne de 8.

7. Méthode selon l'une des revendications 1 à 5, caractérisée en ce que l'oligomère est un acrylate de polyéther-uréthane représenté par la formule développée suivante:

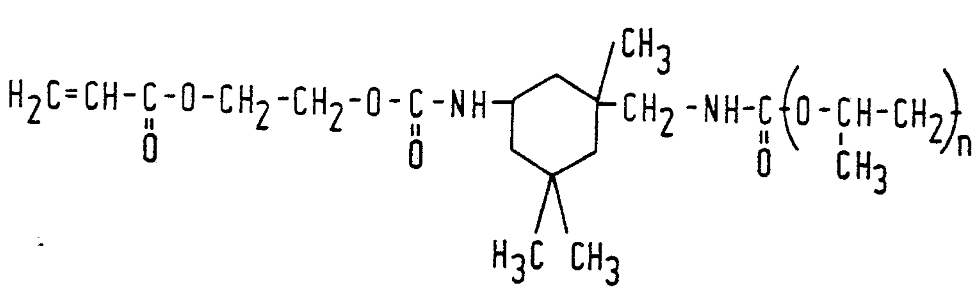

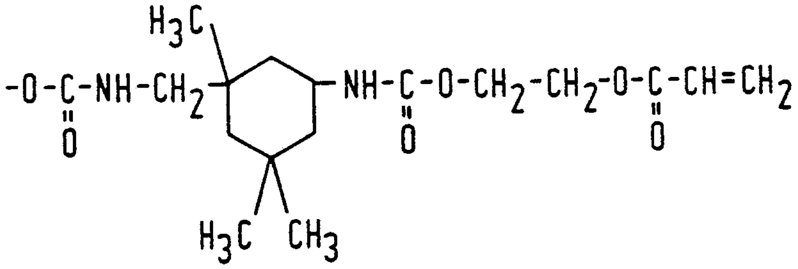

dans laquelle *n* est en moyenne de 75 et dans laquelle le diluant réactif exerçant une influence croissante sur, l'indice de réfraction est sélectionné dans le groupe formé par l'acrylate de 2'-oxybenzophénone-2-éthoxy-éthyle et l'acrylate de 2-phénoxy-éthyle.

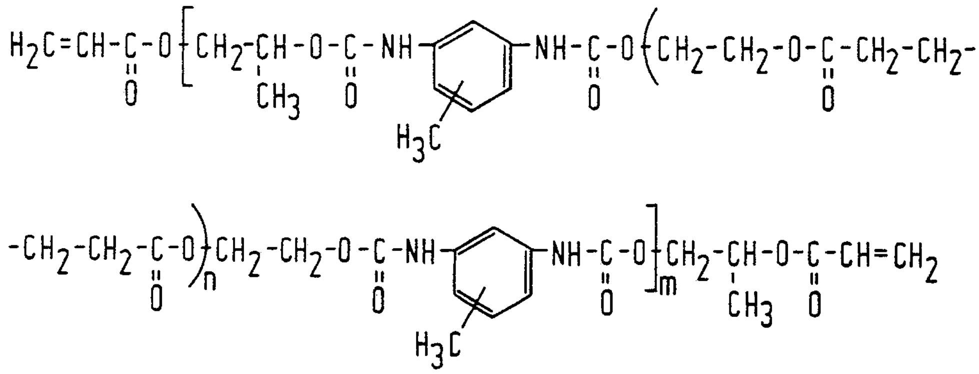

FIG.1

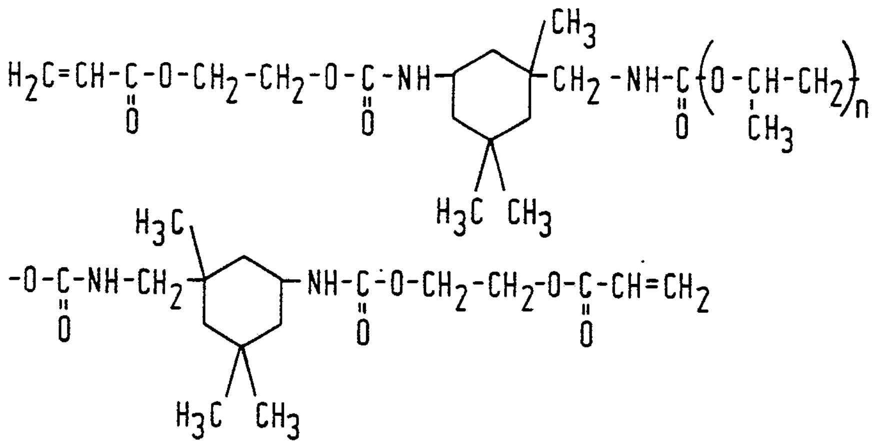

FIG.2

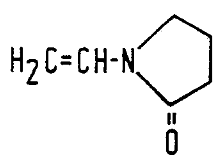

FIG.3

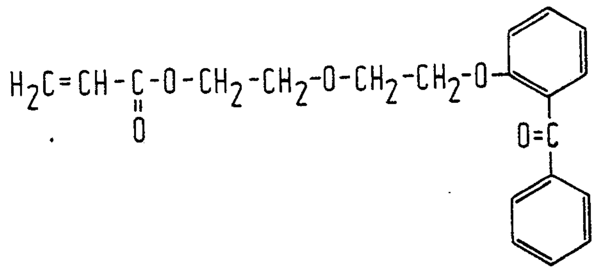

FIG.4

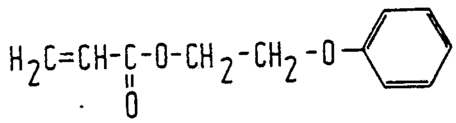

FIG.5

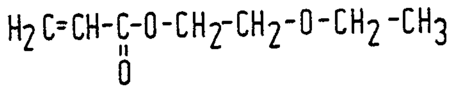

FIG.6

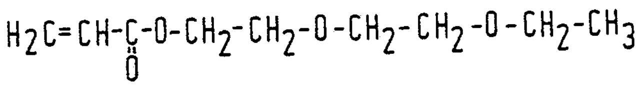

FIG.7

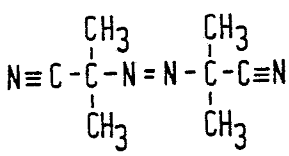

FIG.8

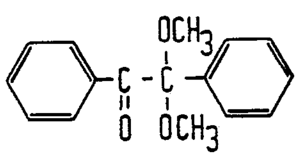

FIG.9

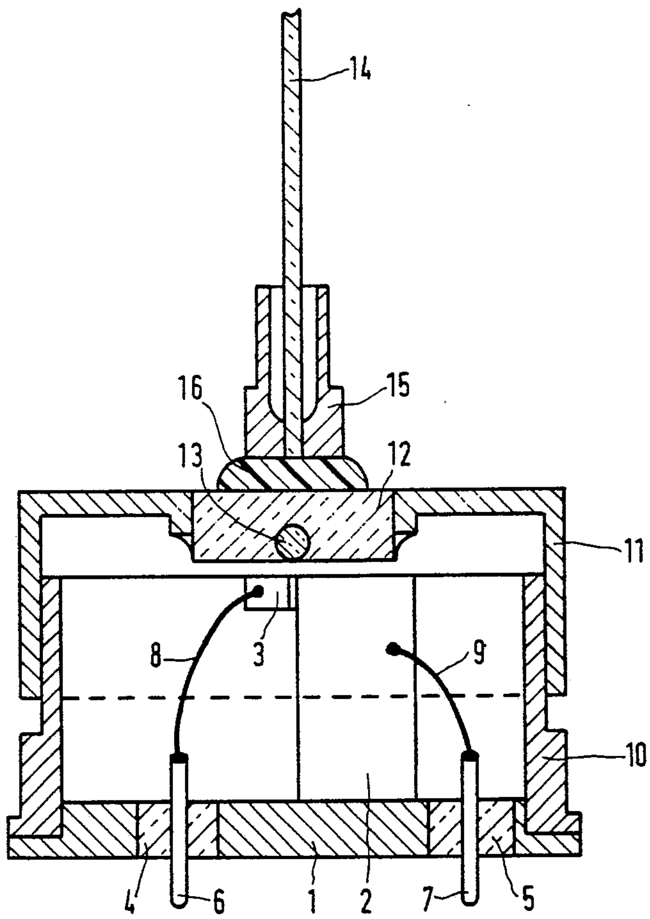


FIG. 10